(19) **Europäisches Patentamt / European Patent Office / Office européen des brevets**

(11) **EP 1 536 552 B1**

(12) **EUROPEAN PATENT SPECIFICATION**

(45) Date of publication and mention
of the grant of the patent:
**12.12.2007 Bulletin 2007/50**

(51) Int Cl.:
***H02P 21/00*** *(2006.01)*     ***H02P 21/14*** *(2006.01)*

(21) Application number: **03741156.8**

(22) Date of filing: **02.07.2003**

(86) International application number:
**PCT/JP2003/008423**

(87) International publication number:
**WO 2004/006424 (15.01.2004 Gazette 2004/03)**

(54) **AC GENERATOR SENSOR-LESS VECTOR CONTROL METHOD AND CONTROL DEVICE THEREOF**

SENSORLOSES VEKTORSTEUERVERFAHREN FÜR EINEN WECHSELSTROMGENERATOR
UND STEUEREINRICHTUNG DAFÜR

PROCEDE ET DISPOSITIF DE COMMANDE VECTEUR, SANS DETECTEUR, D'UN GENERATEUR
A COURANT ALTERNATIF

(84) Designated Contracting States:
**DE FI GB**

(30) Priority: **08.07.2002 JP 2002198712**
**30.10.2002 JP 2002315177**
**25.04.2003 JP 2003121733**

(43) Date of publication of application:
**01.06.2005 Bulletin 2005/22**

(73) Proprietor: **KABUSHIKI KAISHA YASKAWA
DENKI
Kitakyushu-Shi,
Fukuoka 806-0004 (JP)**

(72) Inventors:
• **IURA, Hideaki**
**c/o Kabushiki Kaisha Yaskawa Denki
Kitakyushu-shi, Fukuoka 806-0004 (JP)**
• **NONAKA, Kazuhiro**
**Kabushiki Kaisha Yaskawa Denki
Kitakyushu-shi, Fukuoka 806-0004 (JP)**
• **TERAZONO, Yuichi**
**Kabushiki Kaisha Yaskawa Denki
Kitakyushu-shi, Fukuoka 806-0004 (JP)**
• **YAMAMOTO, Yoichi**
**Kabushiki Kaisha Yaskawa Denki
Kitakyushu-shi, Fukuoka 806-0004 (JP)**
• **SUESHIMA, Kenji**
**c/o Kabushiki Kaisha Yaskawa Denki
Kitakyushu-shi, Fukuoka 806-0004 (JP)**

• **TERAZONO, Katsushi**
**Kabushiki Kaisha Yaskawa Denki
Kitakyushu-shi, Fukuoka 806-0004 (JP)**
• **SAWAMURA, Mitsujiro**
**Kabushiki Kaisha Yaskawa Denki
Kitakyushu-shi, Fukuoka 806-0004 (JP)**

(74) Representative: **Grünecker, Kinkeldey,
Stockmair & Schwanhäusser
Anwaltssozietät
Maximilianstrasse 58
80538 München (DE)**

(56) References cited:
**JP-A- 6 133 584**     **JP-A- 7 046 856**
**JP-A- 10 023 793**     **JP-A- 2001 161 094**
**US-A- 6 163 127**

• **PAN, H.; SPRINGOB, L.; HOLTZ, J.: "Improving
the start and restart behavior through state
recognition of AC drives" PROCEEDINGS OF THE
POWER CONVERSION CONFERENCE -
NAGAOKA 1997, vol. 2, August 1997 (1997-08),
XP002340454**
• **PATENT ABSTRACTS OF JAPAN vol. 2000, no.
12, 3 January 2001 (2001-01-03) -& JP 2000 253506
A (RAILWAY TECHNICAL RES INST; TOSHIBA
CORP), 14 September 2000 (2000-09-14)**

## Description

\<Technical Field\>

The present invention relates to a sensorless vector control method, for an alternating-current motor, whereby, before an alternating-current is started, the velocity of the alternating-current motor in the free running state is estimated and the alternating-current motor is operated at the estimated velocity to provide a smooth start, and to a control apparatus therefor.

\<Background Art\>

Submitted by the present inventor and described in JP-A-2001-161094 is a control method, for an alternating-current motor, whereby are provided a power converter, for outputting power to the alternating-current motor, and a current controller, for controlling the current output by the power converter based on a signal indicating a deviation between a current instruction signal and a detection signal indicating the current output by the power converter, and whereby a velocity detector and a voltage detector are not provided. According to this control method, provided are the power converter, for outputting power to the alternating-current motor, and the power controller, for controlling the current output by the power converter based on a signal indicating a deviation between a current instruction signal and a detection signal indicating the current output by the power converter, and when the alternating-current motor is in the free running state, an arbitrary direct current is supplied for a designated period of time, a frequency component that appears in the detection signal for the power output by the power converter is detected, and the velocity of the alternating-current motor is estimated based on the frequency component.

Also disclosed is a control method whereby, when an alternating-current motor is in the free running state, a current instruction signal described above is forcibly set to zero so as to adjust to zero the current for the alternating-current motor; and whereby the level of the remaining voltage, the phase and the angular velocity of the alternating-current motor are obtained based on an output voltage instruction signal that is obtained by using a calculation employing the current output by the current controller, and then, the rotational direction and the velocity of the alternating-current motor in the free running state are estimated, so that the alternating-current motor can be smoothly started in the free running state.

Furthermore, disclosed is a control method whereby, when an output voltage instruction signal, which is obtained by using a calculation based on the output of the current controller when the current control is performed with a current instruction signal of zero, is lower than an arbitrarily designated voltage level, the current control is halted and an instruction for a direct current having an arbitrary level is transmitted in an arbitrary direction for a designated period of time, and thereafter, an instruction for a current having an arbitrary level is transmitted in a direction for which the phase differs by 180° from the direction in which the direct current instruction is transmitted; whereby the current control is again performed for a designated period of time, and the frequency component that appears in the detected current value and the phase relationship are detected; and whereby the frequency component is estimated to be the velocity of the alternating-current motor and the rotational direction is estimated based on the phase relationship.

However, according to the method described in JP-2001-161094, when a residual high voltage remains in the alternating-current motor, a velocity differing greatly from the actual velocity of the alternating-current motor would be estimated to be due to the averse affect of the residual voltage. In this case, when the alternating-current motor is started while a frequency corresponding to the estimated velocity is designated for the power converter, a large current flows that produces a velocity near the velocity erroneously detected for the alternating-current motor, and the alternating-current motor can not smoothly be restarted.

When a response from the current controller is not satisfactory, it is difficult for the current of the alternating-current motor to be set to zero, the power converter falls into an overcurrent state, and the alternating-current motor can not smoothly be started.

Further, when the alternating-current motor is an induction motor, it is easy for the current of the induction motor to be reduced to zero because the residual voltage in the free running state is gradually reduced. But when the alternating-current motor is a permanent magnet synchronous motor, a high inductive voltage is generated in the free running state at a high velocity, and it is not easy for the current of the permanent magnet synchronous motor to be set to zero.

Furthermore, when the alternating-current motor is in the free running state at a high velocity, the detection resolution for a frequency that appears in a detected current value, or the amplitude of the signal of a frequency component that appears in a detected current value is reduced, so that the frequency can not be detected.

In addition, according to the control method for an alternating-current motor described in JP-A-2001-161094, when the alternating-current motor is in the free running state, an arbitrary direct current is supplied for a designated period of time. However, no specific explanation is given for the method for determining the designated period of time.

According to a control method for an alternating-current motor described in Japanese Patent Application No. 2002-80891, a predesignated frequency and a rotational direction that is detected are set for a frequency adjustment circuit, and when an input torque current detection value is positive, the output frequency is lowered, or when the torque current detection value is negative, the output frequency is increased. When the output frequency is adjusted in this manner, so that it nears the torque current detection value of 0, the output frequency of the alternating-current motor in the free running state can match the output frequency of the power converter, so that a smooth start is obtained.

However, in this case also, the alternating-current motor is not always smoothly restarted, even though the output frequency is adjusted so that it nears the torque current detection value of 0.

A control strategy for abnormal operating conditions of AC drive systems is disclosed in the paper "Improving the Start and Restart Behaviour through State Recognition of AC Drives" from Pan, Springob and Holtz, IEEE, 1997. The document suggests two methods: on the one hand a sensorless field orientated control method, and on the other hand voltage/frequency control method, to smoothly restart an AC motor through state recognition in a free running state. According to the presented methods, a speed of an AC motor is estimated by two kinds of ways according to whether a back EMF exists or not.

Therefore, in order to resolve these shortcomings, it is a first objective of the present invention to provide a sensorless vector control method for an alternating-current motor, whereby when a wrong rotational direction or a wrong velocity is estimated when restarting the alternating-current motor in the free running state, this can be determined to be an erroneous estimate and the alternating-current motor in the free running state can be smoothly restarted, and whereby when an alternating-current motor in the free running state is to be restarted, a period for the application of a direct current to the alternating-current motor is correctly designated, so that the alternating-current motor in the free running state can be smoothly restarted; and a control apparatus therefor.

It is a second objective of the present invention to provide a sensorless vector control method for an alternating-current motor, whereby a running operation can still be smoothly and appropriately continued when a response by a current controller is poor, or when the alternating-current motor is an induction alternating-current motor, or even a permanent magnet synchronous alternating-current motor; and a control apparatus therefor.

It is a third objective of the present invention to provide a sensorless vector control method for an alternating-current motor, whereby the following three points can be satisfied: when, after a current instruction signal is set to zero in order to adjust the current for the alternating-current motor to zero, current control is implemented to increase the response of a current controller and to avoid the entry into an overcurrent state of a power converter, so that the run-time operation can be smoothly continued; when, after an estimated velocity and rotational direction for the alternating-current motor are employed to provide a direct-current instruction for the alternating-current motor, the accuracy of the detection of a frequency is increased for the alternating-current motor in the free running state at a high velocity; and when the run-time operation continues smoothly even while the alternating-current motor is in the free running state at a high velocity; and to provide a control apparatus therefor.

<Disclosure of the Invention>

These objects are solved by the features of method claim 1, apparatus claim 15 and the corresponding dependent claims.

<Brief Description of the Drawings>

Fig. 1 is a block diagram showing the configuration of a sensorless vector control apparatus for an alternating-current motor according to a first embodiment of the present invention;

Fig. 2 is a graph showing a change for a torque current detection value i qfb for a case wherein a direct current is supplied to an alternating-current motor, in the free running state, that is rotated in the forward direction;

Fig. 3 is a graph showing a change for the torque current detection value i qfb for a case wherein a direct current is supplied to the alternating-current motor, in the free running state, that is rotated in the reverse direction;

Fig. 4 is a graph showing a change for the torque current detection value i qfb for a case wherein a direct current is supplied to the alternating-current motor, in the free running state, that is rotated at a low velocity;

Fig. 5 is a graph showing a change for the torque current detection value i qfb for a case wherein a direct current is supplied to the alternating-current motor that has a great secondary circuit time constant, as an example;

Fig. 6 is a flowchart showing the configuration according to the first embodiment;

Fig. 7 is a block diagram showing the configuration of a sensorless vector control apparatus for an alternating-current motor according to a second embodiment of the present invention;

Fig. 8 shows an operation frequency before a free running state and a wait time until a restart occurs;

Fig. 9 is a block diagram showing the configuration of a sensorless vector control apparatus for an alternating-current motor according to a third embodiment of the present invention; and

Fig. 10 is a block diagram showing the configuration of a sensorless vector control apparatus for an alternating-current motor according to a fourth embodiment of the present invention.

The reference numerals used in drawings are as follows:

1: power converter
2: alternating-current motor
3: current detector
4: current coordinates conversion circuit
5: torque current control circuit
6: exciting current control circuit
7: phase operation circuit
8: V/f conversion circuit
9: output voltage operation circuit
10: switching pattern generation circuit
11: frequency adjustment circuit
12, 13, 14, 17: switch
15: velocity estimation circuit (third embodiment)
15B: velocity estimation circuit (fourth embodiment)
16: adder

<Best Modes for Carrying Out the Invention>

The present invention will nowbe described while referring to the drawings.

First, a first embodiment of the present invention will now be explained.

According to the first embodiment, when an alternating-current motor is to be restarted, and when a current flowing in the alternating-current motor is continued at a designated current level or higher for a designated period of time, it is determined that a rotational direction or a velocity is incorrectly estimated for the alternating-current motor, and a direct current or a direct-current voltage is applied again to estimate the rotational direction and the velocity.

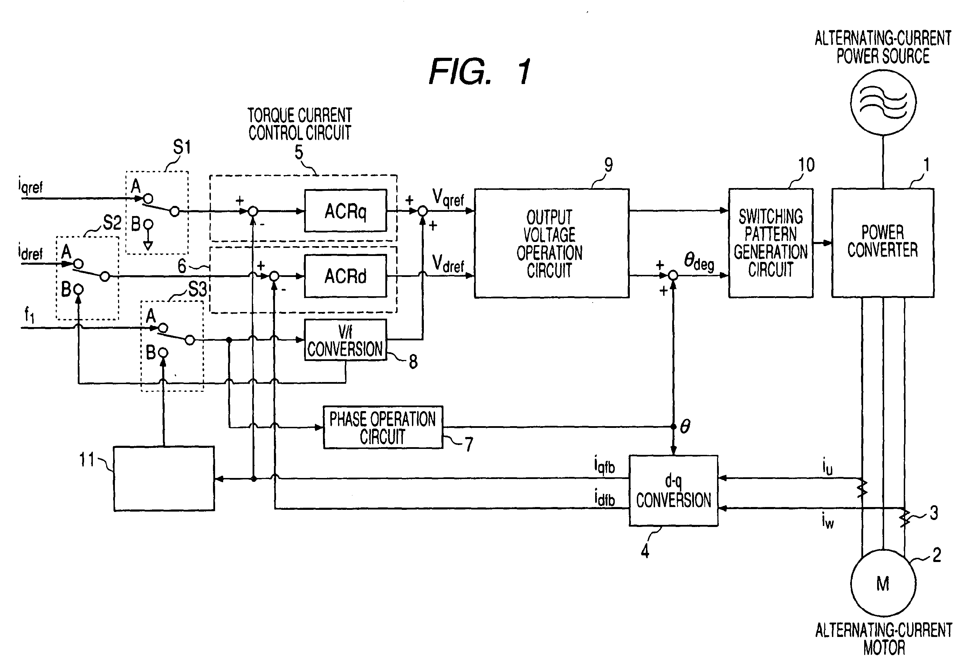

Fig. 1 is a block diagram showing the configuration of a sensorless vector control apparatus for an alternating-current motor according to the first embodiment of the present invention. For this embodiment, the sensorless vector control apparatus for an alternating-current motor includes: a power converter 1, an alternating-current motor 2, a current detector 3, a current coordinates conversion circuit 4, a torque current control circuit 5, an exciting current control circuit 6, a phase operation circuit 7, a V/f conversion circuit 8, an output voltage operation circuit 9, a switching pattern generation circuit 10 and a frequency adjustment circuit 11.

The power converter 1 employs the PWM control system to convert, into an alternating current having an arbitrary frequency and an arbitrary voltage, a direct-current voltage obtained by converting a three-phase alternating current using a power device, and supplies the alternating current to the alternating-current motor 2.

The current detector 3 detects a current supplied to the alternating-current motor 2.

The current coordinates conversion circuit 4 splits the current detected by the current detector 3 to obtain a torque current detection value i qfb and an exciting current detection value i dfb.

The torque current control circuit 5 calculates a first q-axial voltage instruction value V'qref so that a provided torque current instruction value i qref matches the torque current detection value i qfb.

The exciting current control circuit 6 calculates ad-axial voltage instruction value dref so that a provided exciting current instruction value i dref matches the exciting current detection value i dfb.

The phase operation circuit 7 integrates a provided frequency f1 to obtain a phase θ.

The V/f conversion circuit 8 employs the provided frequency f1 to calculate a voltage Eref that corresponds to an induction voltage for the alternating-current motor.

The output voltage operation circuit 9 obtains a second q-axial voltage instruction Vqref by adding the first q-axial voltage instruction value V'qref, which is the output of the torque current control circuit 5, to the voltage Eref, which is the output of the V/f conversion circuit 8, and outputs an output voltage instruction value V1ref and its voltage phase θV in accordance with the second q-axial voltage instruction value Vqref and the d-axial voltage instruction value dref.

The switching pattern generation circuit 10 determines a switching pattern for the power converter 1 based on the output voltage instruction value V1ref and a power converter output phase θdeg, which is obtained by adding the voltage phase θV and the phase θ.

The frequency adjustment circuit 11 is a circuit for adjusting the frequency output by the power converter 1, so that the alternating-motor current 2 in the free running state can be smoothly restarted.

For an estimation of the rotational direction and the velocity of the alternating-current motor 2 in the free running state, a direct current instruction is provided for the exciting current instruction value i dref during an arbitrarily designated period of time, then, the current control is performed by changing the sign and the level of the direct current instruction and the change in the torque current detection value i qfb is measured.

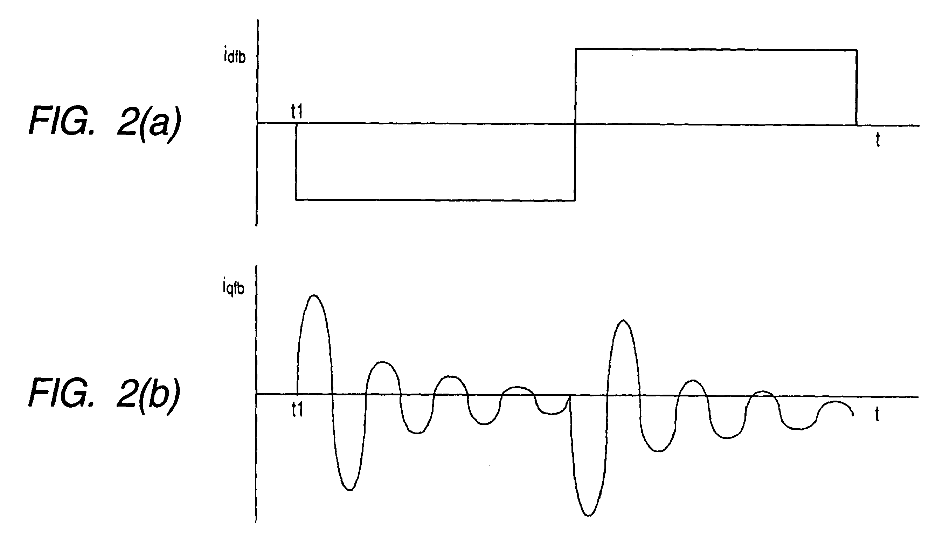

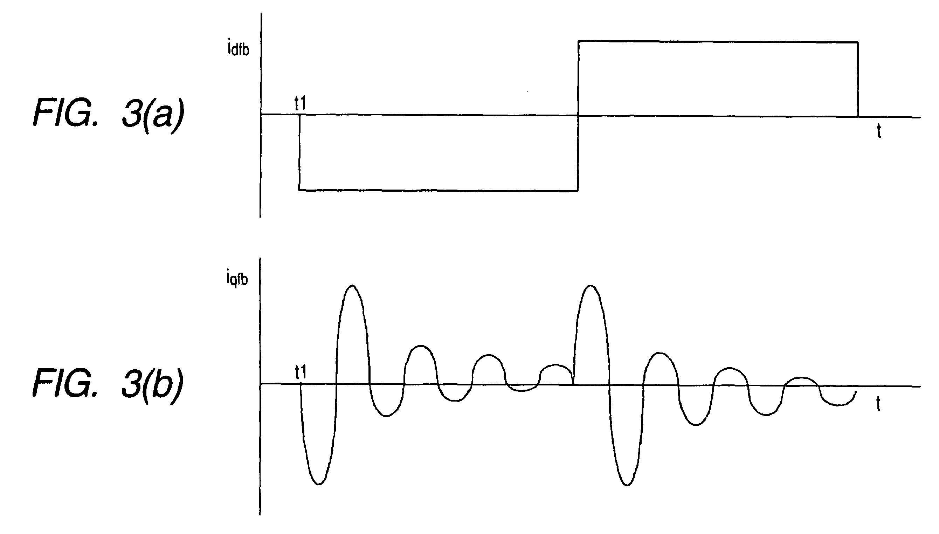

According to this invention, a direct current or a direct-current voltage is applied to the alternating-current motor in the free running state before it is restarted, and a secondary current that is flowing at this time is employed to estimate the rotational direction and the velocity of the alternating-current motor. In Fig. 2 is shown a case wherein the alternating-current motor 2 is rotated forward in the free running state, and in Fig. 3 is shown a case wherein the alternating-current motor 2 is rotated in reverse in the free running state. In Figs. 2 and 3, (a) represents the exciting current detection value i dfb of the alternating-current motor 2, and (b) represents a time-transient change of the torque current detection value i qfb of the alternating-current motor 2.

In Fig. 2, when at time t1 shown in (a) the exciting current detection value i dfb having a negative rectangular wave is supplied to the alternating-current motor 2 that is rotated forward in the free running state, the torque current detection value i qfb having a waveform that rises in the positive direction is produced, as is shown in (b).

On the other hand, as is shown in Fig. 3, when at time t1 in (a) the exciting current detection value i dfb having a negative rectangular wave is supplied to the alternating-current motor 2 that is rotated in reverse in the free running state, the torque current detection value i qfb having a waveform that falls in the negative direction is produced, also as is shown in (b).

By focusing on this point, the time-transient change of the obtained torque current detection value i qfb can be employed to detect the rotational direction, and when the frequency of the torque current detection value i qfb is measured, the velocity of the alternating-current motor can be estimated.

The thus estimated rotational direction and velocity of the alternating-current motor 2 are set in the frequency adjustment circuit 11, which is then operated. The frequency adjustment circuit 11 adjusts a frequency so that the torque current detection value i qfb reaches zero, and matches the velocity of the alternating-current motor 2 in the free running state with the output frequency of the power converter. Thus, the alternating-current motor 2 can be smoothly started.

Furthermore, according to the present invention, when the estimated velocity value is wrong, or when the rotational direction is erroneously detected, this is automatically ascertained and a direct current is again applied to estimate the rotational direction and the velocity of the alternating-current motor based on the time-transient change in the torque current detection value i qfb. That is, it is assumed, in accordance with the level of the current flowing in the alternating-current motor, that the rotational direction and the frequency designated for the frequency adjustment circuit have deviated from the actual rotational direction and the actual velocity of the alternating-current motor. Specifically, regarded as a necessary condition is that the level of a current flowing in the alternating-current motor be continued, at a level equal to or higher than the level of a designated current, for a designated period of time. When this condition is established, the restarting of the alternating-current motor is halted, a direct current or a direct-current voltage is again applied to the alternating-current motor, and a secondary current that is supplied at this time is employed to estimate again the rotational direction and the velocity of the alternating-current motor. For the re-estimation in this case, the velocity is estimated so that the upper limit estimated value for the velocity is lower by a designated velocity level than the previously estimated value, or is equal to the final output value of the frequency adjustment circuit. Then, the frequency corresponding to the estimated value is designated for the frequency adjustment circuit, and the alternating-current motor is started.

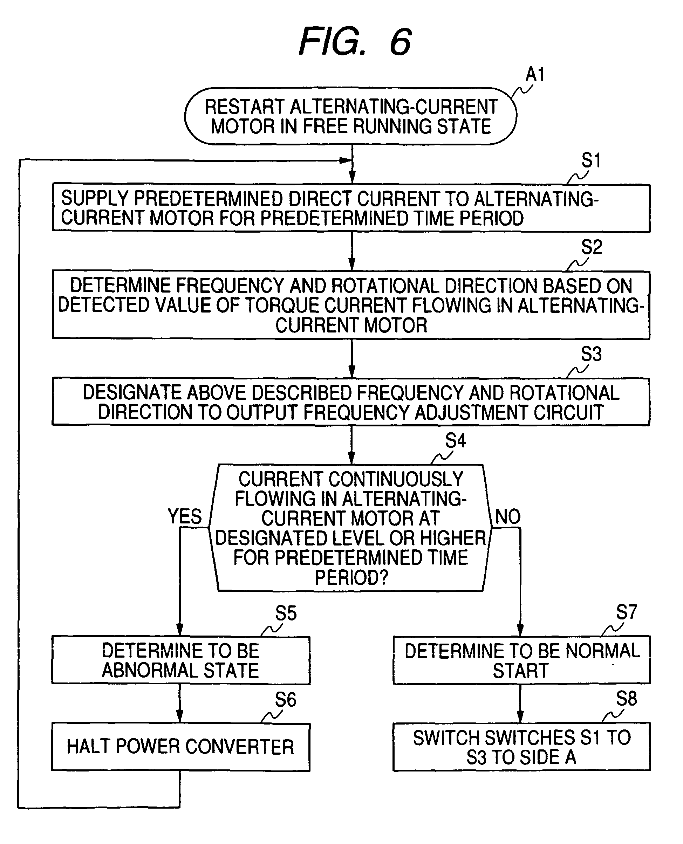

Next, while referring to Figs. 1 and 6, a detailed explanation will be given for the operation of the embodiment for restarting the alternating-current motor in the free running state.

When the alternating-current motor 2 is in the free running state, three switches S1 to S3 in Fig. 1 are changed from the normal running state on a side A to the free running start state on a side B. Therefore, the torque current instruction value i qref = 0 is established, an exciting current instruction is output by the V/f conversion circuit 8, and the output frequency f1 is output by the frequency adjustment circuit 11. It should be noted that a zero frequency is set as an initial value for the output frequency adjustment circuit 11. Then, an arbitrary direct current (see (a) in Fig. 2 or 3) is supplied to the alternating-current motor 2 for a designated period of time (step S1). The detection value i qfb (see (b) in Fig. 2 or 3) for a torque current that is flowing at this time is employed to estimate the frequency and the rotational direction (step S2). Based on the estimation results, the frequency and the rotational direction are again designated for the output frequency adjustment circuit 11 (step S3).

After the frequency and the rotational direction are again designated for the output frequency adjustment circuit 11, the V/f conversion circuit 8 operates an exciting current instruction in accordance with a secondary circuit time constant so as to raise a magnetic flux, and the magnetic flux and the designated frequency f1 are employed to calculate and output the voltage Eref that corresponds to an induction voltage for the alternating-current motor.

The frequency adjustment circuit 11 reduces the frequency when the torque current detection value i qfb is positive, or increases the output frequency when the torque current detection value i qfb is negative, so that the torque current detection value i qfb approaches 0.

When the magnetic flux has reached the level for normal operation, and when the torque current detection value i qfb reaches a specific setup level close to 0 (i.e., when the current flowing in the alternating-current motor is no longer continued at a setup level or higher for an arbitrary period of time (NO at step S4)), it is determined that the alternating-current motor can be started normally, and the three switches S1 to S3 are switched to side A (step S7).

On the other hand, when, while the frequency adjustment circuit 11 is adjusting the frequency, the current flowing in the alternating-current motor is continued at an arbitrary setup level or higher for an arbitrary period of time (YES at step S4), it is determined in this embodiment that an abnormal state has apparently occurred (step S5). This state is a case wherein either the rotational direction of the alternating-current motor differs from the rotational direction designated for the frequency adjustment circuit 11, or wherein the velocity of the alternating-current motor deviates greatly from the frequency setup value designated for the frequency adjustment circuit 11.

When this state is detected, the power converter is temporarily halted (step S6), program control returns to step S1, whereat a direct current is again applied, the rotational direction and the velocity of the alternating-current motor are estimated and again designated for the frequency adjustment circuit.

In this case, a value obtained by subtracting an arbitrary level value from the previously estimated frequency, or the last frequency output by the frequency adjustment circuit, is defined as the upper limit for the estimated velocity value of the alternating-current motor. Then, an erroneous detection during re-evaluation can be prevented.

Furthermore, in this embodiment, an explanation is given for the power conversion apparatus that splits the current flowing in the alternating-current motor 2 into a torque current and an exciting current, and provides vector control for controlling these currents independently. However, the present invention can also be provided by a power conversion apparatus that provides constant V/f control by performing exactly the same processing, so long as a current control circuit is additionally provided that applies a current flowing in the alternating-current motor in the free running state into a torque current and an exciting current, and that controls these currents independently.

A modification of the first embodiment will now be described.

The modification of the first embodiment relates to a method for setting an arbitrary period of time during which a direct current instruction is provided for the exciting current instruction value i dref. A greater value, either the lower limit value of the estimated velocity for the alternating-current motor or a secondary circuit time constant, is designated as an arbitrary period for applying a direct current in order to correctly estimate the rotational direction and the velocity of the alternating-current motor.

As one method for measuring the frequency of a torque current detection value, there is a method for measuring a cycle for a peak on the positive side and a peak on the negative side, or a cycle between zero cross points.

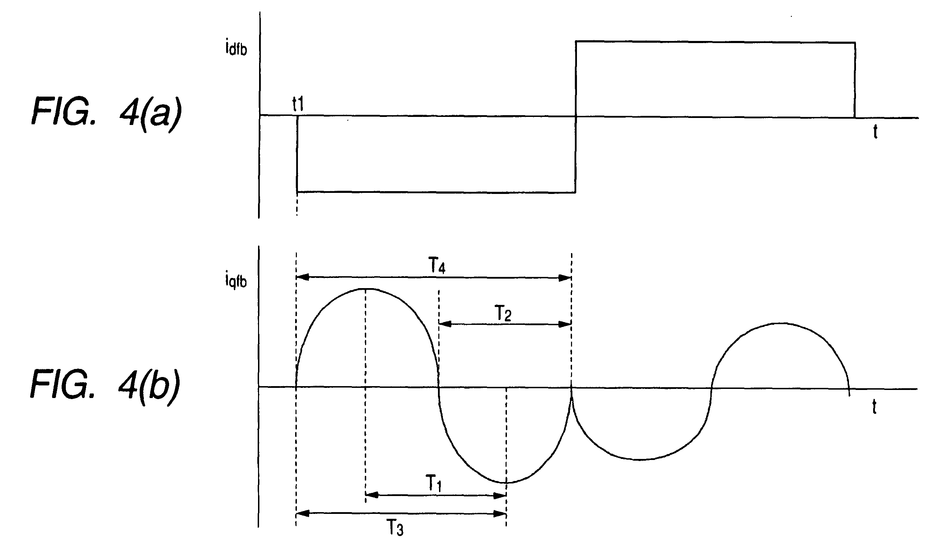

However, when a cycle T1 between a peak on the positive side and a peak on the negative side or a cycle T2 between zero cross points, shown in Fig. 4, can not be measured, the frequency can not be detected. Therefore, a direct current must be continuously supplied to enable the detection of the frequency.

Thus, the focus is that so long as the alternating-current motor is in the free running state at a low velocity, the power converter can be smoothly activated, with little shock, even with the zero frequency or the lowest frequency that can be output, and thus, the lower limit value is designated in advance as the estimated velocity value for the alternating-current motor in the free running state. When the estimated velocity is lower than the lower limit value, it is determined that the alternating-current motor is halted, and the estimated velocity value is set as a predesignated value or a zero frequency for the frequency adjustment circuit.

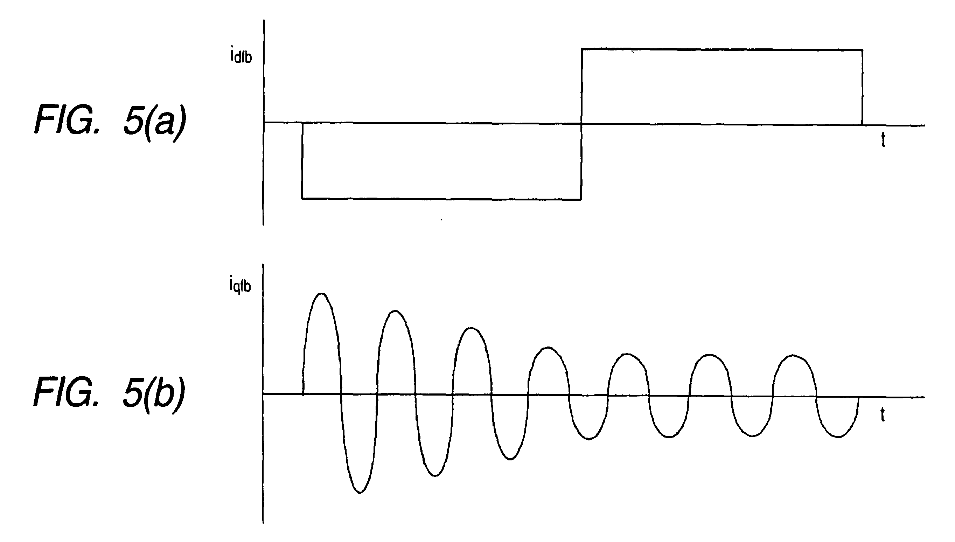

Further, for an alternating-current motor having a large secondary circuit time constant, a case occurs wherein the torque current detection value i qfb has a waveform shown in Fig. 5, due to the affect of a residual voltage, and wherein a rotational direction can not be accurately detected. In order to negate the affect of the residual voltage, a direct current is applied during a period equivalent to, or proportional to, the secondary circuit time constant.

As a result, the residual voltage is canceled by the applied current, the waveform in Fig. 5 is changed to the waveform shown in Fig. 2 (or Fig. 3), which is easily deleted, and the rotational direction can be accurately estimated.

Therefore, as the method for the setup of an arbitrary period wherein a direct current instruction is provided, a longer period is allocated, either a period obtained based on the predesignated lower limit value for the velocity estimated value, or a period equivalent to or proportional to the secondary circuit time constant.

Since the operation for restarting the alternating-current motor in the free running state is described in detail in the first embodiment, no explanation for it will be given here.

An explanation of the present invention is given for a power conversion apparatus that splits a current flowing in the alternating-current motor 2 into a torque current and an exciting current, and that provides vector control for controlling these currents independently. However, the present invention can also be provided by a power conversion apparatus that provides constant V/f control by performing exactly the same processing, so long as a current control circuit is additionally provided that splits a current flowing in the alternating-current motor in the free running state into a torque current and an exciting current and that controls these currents independently.

Moreover, in the present invention, as the frequency measurement method, an explanation is given for the method used to measure a cycle between a peak on the positive side and a peak on the negative side, or a cycle between the zero cross points. However, the velocity of the alternating-current motor can also be estimated by using a common frequency detection method that is established.

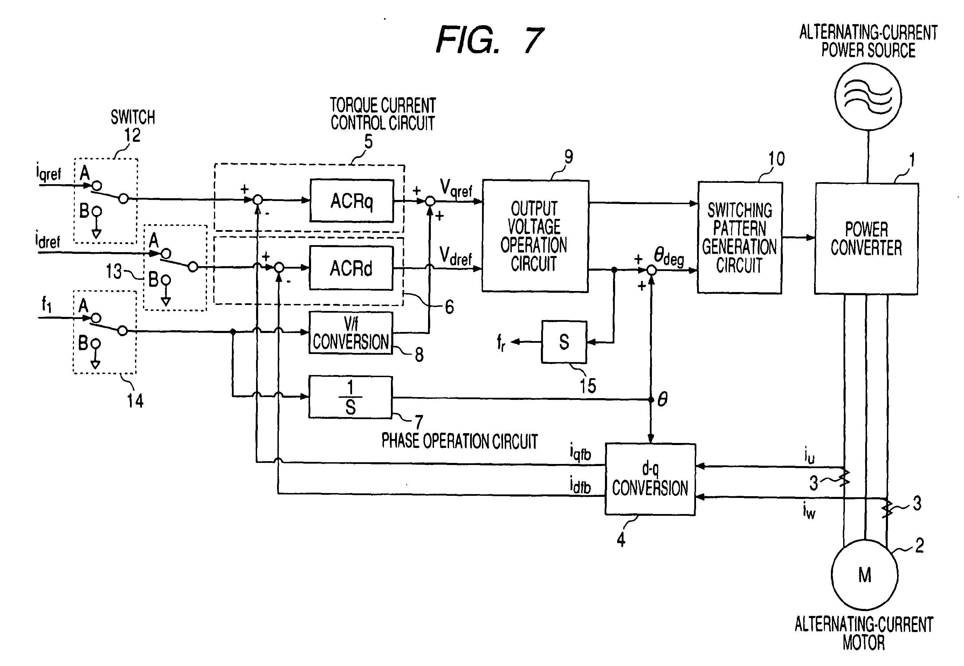

Fig. 7 is a block diagram showing the configuration of a sensorless vector control apparatus for an alternating-current motor according to a second embodiment of the present invention. For this embodiment, the sensorless vector control apparatus for an alternating-current motor includes: a power converter 1, an alternating-current motor 2, a current detector 3, a current coordinates conversion circuit 4, a torque current control circuit 5, an exciting current control circuit 6, a phase operation circuit 7, a V/f conversion circuit 8, an output voltage operation circuit 9, a switching pattern generation circuit 10, switches 12, 13 and 14 and a velocity estimation circuit 15.

The power converter 1 performs switching of a main circuit power device, and employs the PWM control system to convert, into an alternating current having an arbitrary frequency and an arbitrary voltage, a direct-current voltage obtained by forward conversion of a three-phase alternating current using a power device, and supplies the alternating current to the alternating-current motor 2. The current detector 3 detects a current supplied to the alternating-current motor 2. The current coordinates conversion circuit 4 splits the current detected by the current detector 3 to obtain a torque current detection value iqfb and an exciting current detection value idfb. The torque current control circuit 5 calculates a first q-axial voltage instruction value V'qref so that a provided torque current instruction value iqref matches the torque current detection value iqfb. The exciting current control circuit 6 calculates a d-axial voltage instruction value dref so that a provided exciting current instruction value idref matches the exciting current detection value idfb.

The phase operation circuit 7 integrates a provided frequency f1 to obtain a phase θ. The V/f conversion circuit 8 employs the provided frequency f1 to calculate a voltage Eref that corresponds to an induction voltage for the alternating-current motor.

The output voltage operation circuit 9 obtains a second q-axial voltage instruction Vqref by adding the first q-axial voltage instruction value V'qref, which is the output of the torque current control circuit 5, to the voltage Eref, which is the output of the V/f conversion circuit 8, and outputs an output voltage instruction value V1ref and its voltage phase θv in accordance with the second q-axial voltage instruction value and the d-axial voltage instruction value. The switching pattern generation circuit 10 determines a switching pattern for the power converter 1 based on the output voltage instruction value V1ref and a power converter output phase θdeg, which is obtained by adding the voltage phase θv and the phase θ.

The velocity estimation circuit 15 is a circuit for estimating a velocity fr for the alternating-current motor 2 in the free running state. The switch 12 is a switch that switches the torque current instruction value iqref to a side B, which is zero, or to a side A, which is for the input to the torque current control circuit 5. The switch 13 is a switch for switching the exciting current instruction value idref to a side B, which is zero, or to a side A, which is for the input to the exciting current control circuit 6. The switch 14 is a switch that switches the frequency f1 to a side B, which is zero, or to a side A, which is for the input to the V/f conversion circuit 8.

A detailed explanation will now be given for the operation for restarting the alternating-current motor in the free running state. When the alternating-current motor 2 is in the free running state, the three switches 12, 13 and 14 in Fig. 7 are switched from the normal running state on the side A to the free-running start state on the side B. Then, the torque current instruction value iqref = 0 and the exciting current instruction value idref = 0 are established. Further, since a reference phase is not present because the alternating-current motor is in the free running state, a phase that is to be added in accordance with the output frequency during the normal control is fixed at zero, and a current flowing in the alternating-current motor is adjusted to zero. Since an induction voltage is generated in accordance with the rotational velocity of the alternating-current motor in the free running state, and is rotated at the rotational velocity of the alternating-current motor, a current is supplied between the alternating-current motor 2 and the power converter 1 when the power converter 1 is initiated, regardless of the levels of the rotational velocity and the induction voltage of the alternating-current motor 2. Therefore, the current must be adjusted to zero by the torque current control circuit 5 and the exciting current control circuit 6, so that the level of the induction voltage, the phase and the frequency of the alternating-current motor 2 match the level of the output voltage, the phase and the frequency of the power converter. Adjusting the current flowing in the alternating-current motor to zero is called zero-current control.

A first q-axial voltage instruction value V'qref and a d-axial voltage instruction value Vdref, which are the outputs of the torque current control circuit 5 and the exciting current control circuit 6 during zero-current control, are voltage instruction values for which a frequency having a sine wave form is consonant with the rotational velocity of the alternating-current motor 2. The output voltage operation circuit 9 receives the first q-axial voltage instruction value V'qref and the d-axial voltage instruction value, and outputs the output voltage instruction value V1ref and the voltage phase θV. The output voltage instruction value V1ref represents the level of an induction voltage for the alternating-current motor, and the voltage phase θ0 represents the phase of the induction voltage. When the time-transient change in the phase of the induction voltage is measured for each specific period of time, the velocity estimation circuit 15 measures the frequency of the induction voltage. Since, as is apparent from the previous explanation, the frequency for the induction voltage matches the rotational velocity of the alternating-current motor 2, the rotational velocity of the alternating-current motor

2 in the free running state can be estimated. When the alternating-current motor is rotated in reverse, the phase change ratio becomes negative, so that the forward rotation or the reverse rotation of the alternating-current motor in the free running state can also be estimated. As is described above, when the induction voltage of the alternating-current motor is observed through zero-current control, not only the rotational direction but also the rotational velocity of the alternating-current motor can be estimated.

An explanation will now be given for a method whereby an estimated rotational direction and an estimated velocity are set for the power converter when zero-current control is switched to normal control. When the power converter 1 is started by matching only the frequencies in order to shift the zero-current control state to normal operation, an overcurrent may flow to the alternating-current motor and a smooth start may not be obtained. In order to prevent this, the induction voltage at the level during zero-current control and the phase must be continued even at the moment zero-current control is shifted to normal control. Therefore, the initial value must be set for the output voltage instruction value v1ref, the output phase θdeg and the output frequency f1 of the power converter. Specifically, in a normal operation state, the output phase θdeg of the power converter is adjusted by using the phase of the magnetic flux of the alternating-current motor 2 as a reference, while in zero-current control, the output phase is the one consonant with the induction voltage of the alternating-current motor 2. As a result, during zero-current control, the phase for forward rotation is advanced 90° from the phase during normal control, and the phase for the reverse rotation is delayed 90°. Therefore, in accordance with the rotational direction, the phase is corrected by 90° from the last phase in the zero-current control, the estimated value fr, which is output by the velocity estimation circuit 15 as the rotational velocity of the alternating-current motor 2, is converted into a phase, this obtained phase is added to the corrected phase, and the resultant value is set as an initial value for the output phase θdeg of the power converter. Through this processing, continuity of the phase can be maintained.

Further, the output voltage instruction value V1ref, output during zero-current control, is designated as an induction voltage, and continuity of the output voltage is maintained. Through this processing, zero-current control can be smoothly shifted to normal control.

As for an induction motor used as the alternating-current motor, since an induction voltage is attenuated in accordance with the secondary circuit time constant, it is determined, when the induction voltage has reached the normal V/f level based on the secondary circuit time constant, that the alternating-current motor in the free running state can be started normally, and the three switches 12, 13 and 14 are switched to side A.

As for a permanent magnet synchronous motor that is used as the alternating-current motor, since an induction voltage is not attenuated, it is determined, when the process is completed for obtaining continuity for the phase and the output voltage, that the alternating-current motor in the free running state can be normally started, and the three switches 12, 13 and 14 are switched to side A.

An explanation will now be given for a method for determining a wait time until the power converter is restarted. In order to estimate the velocity of the alternating-current motor in the free running state, the first q-axial voltage instruction value V'qref and the d-axial voltage instruction value Vdref, which are the outputs of the torque current control circuit 5 and the exciting current control circuit 6, must match the induction voltage of the alternating-current motor. This will not be a problem so long as the torque current control circuit 5 and the exciting current control circuit 6 demonstrate satisfactory functions for reducing the current flowing in the alternating-current motor to zero.

However, when the gains in the torque current control circuit 5 and the exciting current control circuit 6 are low, or when the alternating-current motor is rotated at a high velocity, a high induction voltage occurs, and an excessive amount of current flows immediately after the power converter is started, so that the power converter may be tripped and may not be smoothly started. To prevent this, the response capabilities of the torque current control circuit 5 and the exciting current control circuit 6 need only be obtained in advance, and the voltage level generated by the alternating-current motor in the free running state need only be set equal to or lower than an arbitrary value, so that zero-current control can be performed, and estimation of the velocity is enabled. That is, the induction voltage of the alternating-current motor need only be set equal to or lower than a arbitrarily designated voltage level.

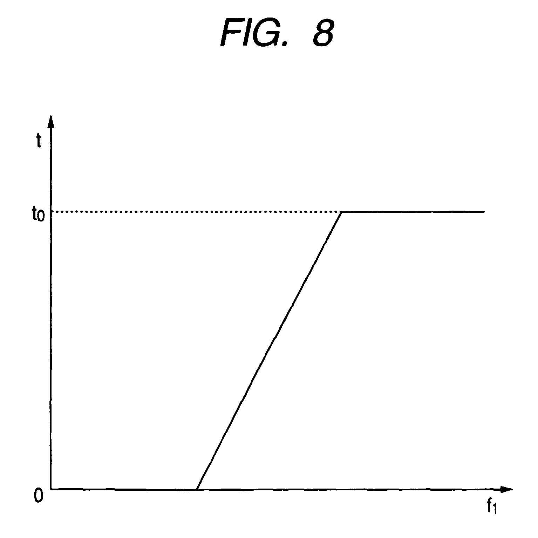

This can be provided, as one method, by controlling the period of time before the power converter is restarted. Since the induction voltage of the alternating-current motor is determined based on a running time frequency before the free running state, the wait time is not required when the operation is performed with a frequency at which the induction voltage is reduced until equal to or lower than the arbitrarily designated voltage level. When the operation is performed at this frequency or higher, the wait time is required, and can be obtained in accordance with the running time frequency before the free running state and the secondary circuit time constant of the alternating-current motor. When the maximum wait time required is calculated and obtained in accordance with the secondary circuit time constant of the alternating-current motor, an appropriate wait time can be determined, as is shown in Fig. 8, in accordance with the running-time frequency before the alternating-current motor enters the free running state.

An explanation will now be given for a method according to another invention for coping with a case wherein, since the induction voltage of the alternating-current motor is large, it is difficult for the current in the alternating-current motor to be adjusted to zero. When the alternating-current motor is an induction motor having a large secondary circuit time constant or a permanent magnet synchronous motor, there is a possibility that the induction voltage will not be reduced until equal to or lower than an arbitrarily designated voltage level, even when the above described wait time has elapsed. In this case, zero-current control is temporarily halted, switching is performed for the power converter, so that the three phases of the alternating-current motor are short-circuited, and the three-phase short circuit is continued for an arbitrarily designated period of time. Then, a damping force is generated in the alternating-current motor, which thereafter decelerates.

Therefore, the induction voltage of the alternating-current motor is reduced. After an arbitrary period of time has elapsed, zero-current control is again initiated, and when the induction voltage is dropped until equal to or lower than the arbitrarily designated voltage level, the velocity can be estimated through zero-current control. However, when the induction voltage is not equal to or lower than the arbitrarily designated voltage level, the switching is again performed to maintain the three-phase short circuit during the arbitrary period of time. As is described above, it is characterized in that this process is repeated until the induction voltage of the alternating-currentmotor is reduced to the arbitrarily designated voltage level, so that the flow of an excessive amount of current and the tripping of the power converter can be prevented, and the alternating-current motor can be smoothly restarted.

Furthermore, in this embodiment, an explanation will be given for the power conversion apparatus that splits a current flowing in the alternating-current motor 2 into a torque current and an exciting current, and that provides vector control for controlling these currents independently. However, the present invention can also be provided by a power conversion apparatus that performs the constant V/f control by performing exactly the same processing, so long as a current control circuit is additionally provided that splits a current flowing in the alternating-current motor in the free running state into a torque current and an exciting current, and that controls these currents independently.

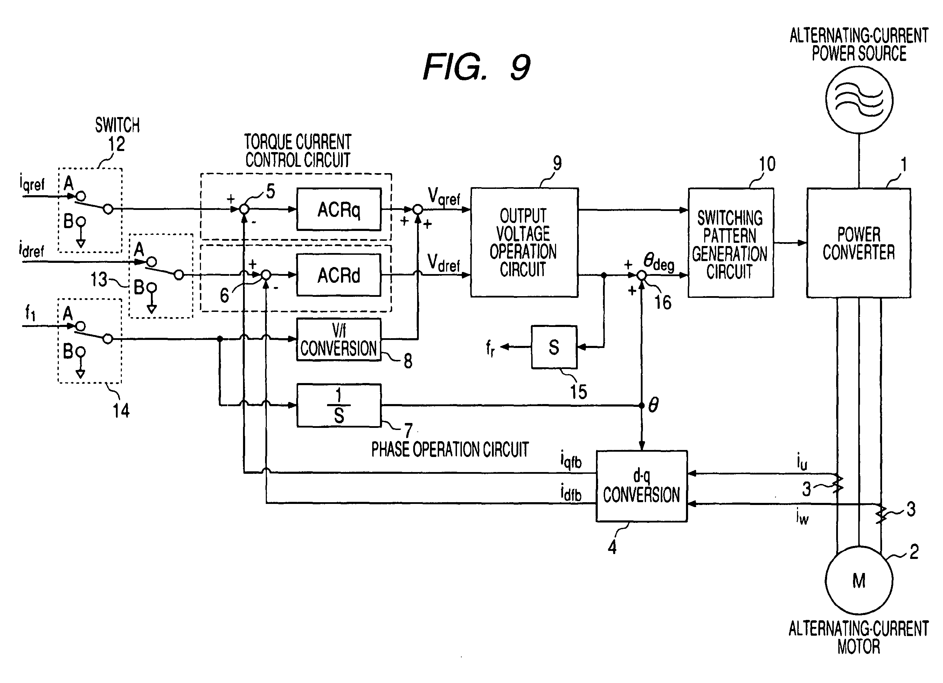

Fig. 9 is a block diagram showing the configuration of a sensorless vector control apparatus for an alternating-current motor according to a third embodiment of the present invention.

For this embodiment, the sensorless vector control apparatus for an alternating-current motor includes: a power converter 1, an alternating-current motor 2, a current detector 3, a current coordinates conversion circuit 4, a torque current control circuit 5, an exciting current control circuit 6, a phase operation circuit 7, a V/f conversion circuit 8, an output voltage operation circuit 9, a switching pattern generation circuit 10, a velocity estimation circuit 15 and an adder 16. The power converter 1 employs the PWM control system to convert, into an alternating current having an arbitrary frequency and an arbitrary voltage, a direct-current voltage obtained by converting a three-phase alternating current using a power device, and supplies the alternating current to the alternating-current motor 2.

The current detector 3 detects a current supplied to the alternating-currentmotor 2, and supplies a current detection signal to the current coordinates conversion circuit 4.

The current coordinates conversion circuit 4 splits the current detected by the current detector 3 to obtain a torque current detection value iqfb and an exciting current detection value idfb, transmits the obtained torque current detection value iqfb to the torque current control circuit 5, and transmits the obtained exciting current detection value idfb to the exciting current control circuit 6. The torque current control circuit 5 calculates a first q-axial voltage instruction value V'qref so that a provided torque current instruction value iqref matches the torque current detection value iqfb.

The exciting current control circuit 6 calculates a d-axial voltage instruction value dref so that a provided exciting current instruction value idref matches the exciting current detection value idfb.

The phase operation circuit 7 integrates a provided frequency f1 to obtain a phase θ, and transmits the phase θ to the current coordinates conversion circuit 4 and the adder 16.

The V/f conversion circuit 8 employs the provided frequency f1 to calculate a voltage Eref that corresponds to an induction voltage for the alternating-current motor. This voltage Eref is set in advance so as to establish Eref/f1 = constant value.

The output voltage operation circuit 9 obtains a second q-axial voltage instruction Vqref by adding the first q-axial voltage instruction value V'qref, which is the output of the torque current control circuit 5, to the voltage Eref, which is the output of the V/f conversion circuit 8, and outputs an output voltage instruction value V1ref and its voltage phase θV in accordance with the second q-axial voltage instruction value Vqref and the d-axial voltage instruction value dref.

$$V1ref = [(Vdref)2+(Vqref)2]1/2 \qquad \ldots (1)$$

$$θV = tan-1(Vqref/Vdref) \qquad \ldots (2)$$

The switching pattern generation circuit 10 determines a switching pattern for the power converter 1 based on the output voltage instruction value V1ref and a power converter output phase θdeg, which is obtained by adding the voltage phase θV and the phase θ.

The velocity estimation circuit 15 is a circuit that employs changes in the voltage phase θV, by the unit hour, to estimate the velocity fr and the rotational direction of the alternating-current motor 2 in the free running state.

A detailed explanation will now be given for the operation for restarting the alternating-current motor in the free running state. When the alternating-current motor 2 is in the free running state, the three switches 12, 13 and 14 in Fig. 9 are switched from the normal running state on the side A to the free-running start state on the side B. Then, the torque current instruction value iqref = 0 and the exciting current instruction value idref = 0 are established. Further, since a reference phase is not present because the alternating-current motor is in the free running state, a phase that is to be added in accordance with the output frequency during the normal control is fixed at zero, and a current flowing in the alternating-current motor is adjusted to zero. Since an induction voltage is generated in accordance with the rotational velocity of the alternating-current motor 2 in the free running state, and is rotated at the rotational velocity of the alternating-current motor, a current is supplied between the alternating-current motor 2 and the power converter 1 when the power converter 1 is initiated, regardless of the levels of the rotational velocity and the induction voltage of the alternating-current motor 2. Therefore, the current must be adjusted to zero by the torque current control circuit 5 and the exciting current control circuit 6, so that the level of the induction voltage, the phase and the frequency of the alternating-current motor 2 match the level of the output voltage, the phase and the frequency of the power converter. Adjusting the current flowing in the alternating-current motor to zero is called zero-current control.

A first q-axial voltage instruction value V'qref and a d-axial voltage instruction value Vdref, which are the outputs of the torque current control circuit 5 and the exciting current control circuit 6 during zero-current control, are voltage instruction values for which a frequency having a sine wave form is consonant with the rotational velocity of the alternating-current motor 2. The output voltage operation circuit 9 receives the first q-axial voltage instruction value V'qref and the d-axial voltage instruction value Vdref, and outputs the output voltage instruction value V1ref and the voltage phase θV. The output voltage instruction value V1ref represents the level of an induction voltage for the alternating-current motor, and the voltage phase θ0 represents the phase of the induction voltage. When the time-transient change in the phase of the induction voltage is measured for each specific period of time, the velocity estimation circuit 15 measures the frequency of the induction voltage. Since, as is apparent from the previous explanation, the frequency for the induction voltage matches the rotational velocity of the alternating-current motor 2, the rotational velocity in the free running state can be estimated. When the alternating-current motor is rotated in reverse, the phase change ratio becomes negative, so that the forward rotation or the reverse rotation of the alternating-current motor in the free running state can also be estimated. As is described above, when the induction voltage of the alternating-current motor is observed through zero-current control, not only the rotational direction but also the rotational velocity of the alternating-current motor can be estimated.

An explanation will now be given for a method whereby an estimated rotational direction and an estimated velocity are set for the power converter when zero-current control is switched to normal control.

When the power converter 1 is started by matching only the frequencies in order to shift the zero-current control state to normal operation, an overcurrent may flow to the alternating-current motor and a smooth start may not be obtained. In order to prevent this, the induction voltage at the level during zero-current control and the phase must be continued even at the moment zero-current control is shifted to normal control. Therefore, the initial value must be set for the output voltage instruction value v1ref, the output phase θdeg and the output frequency f1 of the power converter. Specifically, in a normal operation state, the output phase θdeg of the power converter is adjusted by using the phase of the magnetic flux of the alternating-current motor 2 as a reference, while in zero-current control, the output phase is the one consonant with the induction voltage of the alternating-current motor 2. As a result, during zero-current control, the phase for forward rotation is advanced 90° from the phase during normal control, and the phase for the reverse rotation is delayed 90°. Therefore, in accordance with the rotational direction, the phase is corrected by 90° from the last phase in the zero-current control, the estimated value fr, which is output by the velocity estimation circuit 15 as the rotational velocity of the alternating-current motor 2, is converted into a phase, this obtained phase is added to the corrected phase, and the resultant value is set as an initial value for the output phase θdeg of the power converter. Through this processing, continuity of the phase can be maintained.

Further, the output voltage instruction value V1ref, output during zero-current control, is designated as an induction voltage, and continuity of the output voltage is maintained. Through this processing, zero-current control can be smoothly shifted to normal control.

The induction voltage of the alternating-current motor is gradually increased in accordance with the secondary circuit time constant, and when the induction voltage matches the normal V/f level, it is determined that the alternating-current motor in the free running state can be normally started, and the three switches are switched to the side A.

An explanation will now be given for a method according to the present invention for improving current response during zero-current control. In order to estimate the velocity of the alternating-current motor in the free running state, the first q-axial voltage instruction value V'qref and the d-axial voltage instruction value Vdref, which are the outputs of the torque current control circuit 5 and the exciting current control circuit 6 during zero-current control, must match the induction voltage of the alternating-current motor.

This will not be a problem so long as the torque current control circuit 5 and the exciting current control circuit 6 demonstrate satisfactory functions for adjusting the current flowing in the alternating-current motor to zero. However, when the gains of the torque current control circuit 5 and the exciting current control circuit 6 can not be increased, or when the alternating-current motor is rotated at a high velocity, a high induction voltage is generated and an excessive amount of current flows immediately after the power converter is initiated, so that the power converter may be tripped and may not be smoothly started. To prevent this, the responses of the torque current control circuit 5 and the exciting current control circuit 6 must be improved. Since responses are delayed when the scanning period for performing current control is short, the current can be controlled as instructed. So long as the other operations are omitted during zero-current control, the scanning period for current control can be reduced, compared with normal control, and the current control response can be improved. Further, when the preparation of the switching pattern for the power converter is delayed, even though the scanning period for current control is reduced during zero-current control, the effects obtained by the reduction of the scanning period for current control are reduced by half. Therefore, when zero-current control is to be used, only a carrier frequency used as a reference need be increased for the power converter to be operated at a high velocity. In this manner, the current control response can be improved.

As is described above, it is characterized in that the current control scanning period during zero-current control is reduced compared with normal control, or the carrier frequency for the power converter is increased, so that the current control response is improved, the flow of an excessive amount of current during zero-current control and the tripping of the power converter can be prevented, and the alternating-current motor can be smoothly restarted.

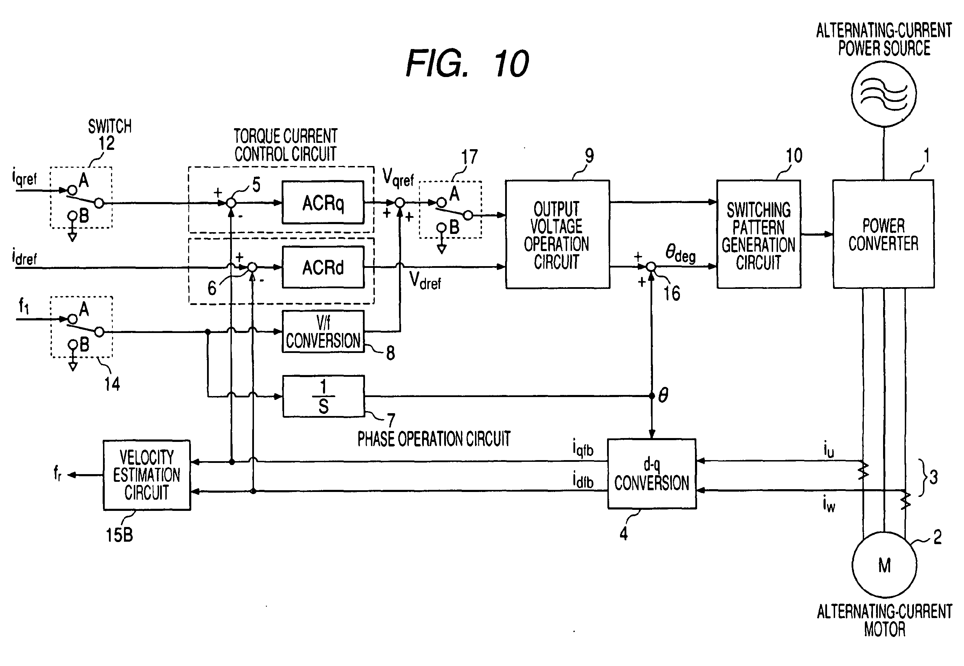

An explanation will now be given by referring to Fig. 10, which is a block diagram showing the configuration of a sensorless vector control apparatus for an alternating-current motor according to a modification for a fourth embodiment of the present invention.

The sensorless vector control apparatus for a motor according to this embodiment includes: a power converter 1, an alternating-current motor 2, a current detector 3, a current coordinates conversion circuit 4, a torque current control circuit 5, an exciting current control circuit 6, a phase operation circuit 7, a V/f conversion circuit 8, an output voltage operation circuit 9, a switching pattern generation circuit 10 and a velocity estimation circuit 15B. Since the components other than the velocity estimation circuit 15B are employed in common, no explanation for them will be given.

The velocity estimation circuit 15B is a circuit used to estimate the velocity and the rotational direction of the alternating-current motor 2, in the free running state, in accordance with a torque current detection value iqfb and an exciting current detection value idfb obtained upon the application of a direct current.

A detailed explanation will now be given for the operation for restarting the alternating-current motor in the free running state. In the third embodiment, when an output voltage instruction value value V1ref, which is output by the output voltage operation circuit 9 during zero-current control, is lower than an arbitrarily designated level, it can not be determined whether this has occurred because the alternating-current motor in the free running state is substantially halted, or whether a residual voltage has dissipated due to a small secondary circuit time constant. Therefore, when this state occurs, the operation in the third embodiment is halted, and a switch is made to the operation in the fourth embodiment.

Three switches (12, 14 and 17) in Fig. 10 are switched from the normal operation state on side A to the free-running start state on side B, and thus, a torque current instruction iqref = 0 is established. Further, since no phase is used as a reference while the alternating-current motor is in the free running state, a phase to be added in accordance with the output frequency during the normal control is fixed at zero, and a current flowing in the alternating-current motor is controlled. In addition, a second q-axial voltage instruction value Vqref is set to zero in order to employ the torque current detection value iqfb, for the alternating-current motor in the free running state, for estimating the velocity and the rotational direction.

A specific setup value is provided as an exciting current instruction value idref in order to excite the alternating-current motor, and the exciting current control circuit 6 provides the control for a designated period of time, so that an exciting current detection value idfb is equal to the exciting current instruction value idref. Thereafter, the sign and the level of the exciting current instruction value idref are changed, and control is provided for a designated period of time.

At this time, by applying a direct current, a magnetic flux is generated in the alternating-current motor in the free running state, so that a secondary current that temporarily flows across the rotor of the alternating-current motor is detected, based on the torque current detection value iqfb. The frequency of the torque current detection value iqfb and the phase information obtained upon the application of the direct current are detected, and the velocity and the rotational direction of the alternating-current motor are estimated.

When the alternating-current motor 2 is rotated forward, the torque current detection value iqfb is changed as is shown in Fig. 2. When the sign of the exciting current detection value idfb is negative, the phase of the torque current detection value iqfb is changed to a sine wave beginning at 0°. When the sign of the exciting current detection value idfb is positive, the phase of the torque current detection value iqfb is changed to a sine wave beginning at 180°. Since the frequency of the sine wave of the torque current detection value iqfb matches the velocity of the alternating-current motor 2 in the free running state, the velocity of the alternating-current motor 2 can be obtained by measuring the frequency of the torque current detection value iqfb. Furthermore, when the alternating-current motor is rotated in reverse, the torque current detection value iqfb is changed as is shown in Fig. 3. When the sign of the exciting current detection value idgb is negative, the phase of the torque current detection value iqfb is changed to a sine wave beginning at 180°. When the sign of the exciting current detection value idfb is positive, the phase of the toque current detection value iqfb is changed to a sine wave beginning at 0°.

As is described above, when a direct current is applied to the alternating-current motor, the phase relationship between the exciting current detection value idfb and the torque current detection value iqfb, and the frequency of the torque current detection value iqfb are detected, so that the velocity and the rotational direction can be estimated.

An explanation will now be given for a method for designating, for the power converter, a rotational direction and a velocity that are estimated when the direct current application state is shifted to normal control after an arbitrary time has elapsed. In this case, unlike the third embodiment, a magnetic flux must be newly generated because almost no induction voltage remains in the alternating-current motor, and the power converter 1 need only be started by matching the rotational direction and the frequency. The induction voltage of the alternating-current motor is gradually increased in accordance with the secondary circuit time constant, and when the induction voltage reaches the normal V/f level, it is determined that the alternating-current motor in the free running state can be normally started, and the three switches are switched to side A.

An explanation will now be given for a method according to the invention for increasing the accuracy whereby a velocity is estimated by detecting the frequency of the torque current detection value iqfb during the application of a direct current.

When the alternating-current motor is in the free running state at a high velocity, the frequency of the torque current detection value igfb in Fig. 2 or 3 is increased. As one method for measuring the frequency of the torque current detection value iqfb, there is a method for measuring the cycle between a peak on the positive side and a peak on the negative side, or the cycle between zero cross points. When the scanning for current control is slow to measure the cycle between a peak on the positive side and a peak on the negative side, or the cycle between zero cross points, the accuracy of the measurement of the cycle is low, and the accuracy of the detection of the frequency is also low. Further, when the alternating-current motor is in the free running state at a high velocity, a difference between a direct current and the frequency of the alternating-current motor is increased, and because of this frequency difference, the impedance is increased while a current flowing in the rotor is reduced. Accordingly, the torque current detection value iqfb is reduced, and it is difficult to measure the cycle between the peak on the positive side and the peak on the negative side of the torque current detection value iqfb, or the cycle between zero cross points.

So long as other operations are omitted during the application of the direct current, the scanning period for current control can be reduced, compared with during normal control, and the frequency detection accuracy can be increased. Furthermore, when the current control scanning period is reduced during the application of the direct current and the carrier frequency of the power converter is increased, the current control response can be improved, and the exciting current detection value idfb can be adjusted to provide a rectangular waveform. Therefore, the secondary current of the alternating-current motor is completely reflected onto the torque current detection value iqfb. In addition, when the velocity of the alternating-current motor in the free running state is increased, the torque current detection value igfb is reduced, and detection is difficult using a common current detection method. Therefore, during the application of the direct current, the detection sensitivity of the current detection circuit need only be increased several times to detect even a small current, so that, in the free running state at a high velocity, the cycle between the peak on the positive side and the peak on the negative side, or the cycle between the zero cross points, can be measured.

It is, therefore, characterized in that: the current control response can be improved by reducing the current control scanning period during the application of a direct current, and by increasing the carrier frequency of the power converter; the velocity of the alternating-current motor in the free running state can be accurately measured since the resolution is increased for the measurement of the cycle between the positive-side peak and the negative-side peak of the torque current detection value iqfb, or the cycle between zero cross points; and since during the application of a direct current the detection sensitivity of the current detection circuit is increased more than when under normal control, the velocity can be detected in the free running state under a restriction, so that the alternating-current motor can be smoothly restarted.

Moreover, according to this embodiment, an explanation is given for a power conversion apparatus that splits a current flowing in the alternating-current motor 2 into a torque current and an exciting current, and provides vector control for controlling these currents independently. However, the present invention can also be provided by a power conversion apparatus that performs the constant V/f control by performing exactly the same processing, so long as a current control circuit is additionally provided that splits a current flowing in the alternating-current motor in the free running state into a torque current and an exciting current and that controls these currents independently.

The present invention is described in detail by referring to specific embodiments. However, it will be obvious for one having ordinary skill in the art that the present invention can be variously modified or altered without departing

**EP 1 536 552 B1**

from the spirit and the scope of the invention.

The present application is based on Japanese Patent Application (No. 2002-198712) filed on July 08, 2002, Japanese Patent Application (No. 2002-315177) filed on October 30, 2002 and Japanese Patent Application (No. 2003-121733) filed on April 25, 2003, and the contents of these applications are employed here as references.

<Industrial Applicability>

As is described above, according to the first embodiment of the present invention, when the alternating-current motor is restarted and the current continuously flows in the alternating-current motor at a designated current level or higher for a designated period of time, it is determined that the rotational direction or the velocity of the alternating-current motor is incorrectly estimated, and a direct current or a direct-current voltage is again applied to estimate the rotational direction and the velocity. Therefore, the alternating-current motor in the free running state can be smoothly restarted.

According to the modification of the first embodiment of the present invention, since a greater value, either the lower limit value of the estimated velocity of the alternating-current motor or the secondary circuit time constant, is designated as an arbitrary period for the application of a direct current, the optimal direct current application time is employed to appropriately estimate the rotational direction and the velocity of the alternating-current motor. Therefore, the alternating-current motor in the free running state can also be smoothly restarted.

According to the second embodiment of the invention, a sensorless vector control method for an alternating-current motor,

whereby there are provided a power converter, for outputting power to an alternating-current motor, and a current controller, for controlling an output current of the power converter based on a signal indicating a deviation between a current instruction signal and a detection signal for an output current of the power converter, and a velocity detector and a voltage detector are not provided,

whereby current control is performed by forcibly setting the current instruction signal to zero so as to reduce to zero a current in the alternating-current motor in a free running state,

whereby a level and a phase of a remaining voltage in the alternating-current motor and an angular velocity are calculatedbasedon an output voltage instruction signal obtained by employing a current output by the current controller, and a rotational direction and a velocity of the alternating-current motor in the free running state are estimated, and whereby, in accordance with a running frequency of the power converter before the free running state, and a secondary circuit time constant of the alternating-current motor, determining a wait time until the current control is started with the current instruction signal set to zero. Therefore, a control method and a control apparatus for an alternating-current motor can be provided whereby, when the response from the current controller is poor, or when not only an induction motor but also a permanent magnet synchronous motor is employed as the alternating-current motor, the operation of the alternating-current motor can be appropriately and smoothly continued.

According to the third embodiment of the invention, when the current control is performed by forcibly setting the current instruction signal to zero in order to reduce the current at the alternating-current motor to zero, the response from the current controller is increased, the overcurrent state of the power converter is avoided, and the operation can be smoothly continued.

According to the fourth embodiment of the invention, when the velocity and the rotational direction of the alternating-current motor in the free running state at a high velocity are estimated by providing a direct current instruction, the accuracy of the detection of the frequency is increased. Thus, effects can be obtained such that the operation can be smoothly continued when the alternating-current motor is in the free running state at a high velocity.

**Claims**

1. A sensorless vector control method for an alternating-current motor comprising the steps of:

   applying a direct current or a direct-current voltage by a power converter to the alternating-current motor (2) in a free running state before the alternating-current motor (2) is restarted,
   estimating a rotational direction and a velocity for the alternating-current motor (2) based on a secondary current flowing between the power converter (1) and the alternating-current motor (2) during the application time of the direct current or the direct-current voltage,
   providing to a frequency adjustment circuit (11) an initial frequency that corresponds to the estimated rotational direction and velocity of the alternating-current motor (2), and
   matching a frequency for controlling the alternating-current motor (2) with the velocity of the alternating-current motor (2) by the frequency adjustment circuit,

**characterized by**
evaluating, if an estimated rotational direction or an estimated velocity deviates from an actual rotational direction or an actual velocity of the alternating-current motor (2) based on the level of a current flowing between the alternating-current motor (2) and the power converter (1) while the frequency adjustment circuit (11) adjusts the frequency.

2. The sensorless vector control method according to claim 1, **characterized in that**
the level of the current flowing between the alternating-current motor (2) and the power converter (1), when being equal to or higher than a certain current level during a predetermined period of time, is used to determine whether the estimated rotational direction and velocity respectively frequency deviates from the actual rotational direction and velocity of the alternating-current motor (2).

3. The sensorless vector control method according to claim 1 or 2, **characterized by**
if the estimated rotational direction and frequency respectively velocity deviates from the actual rotational direction and velocity of the alternating-current motor (2):

reapplying a direct current or a direct-current voltage to the alternating-current motor (2),
employing a secondary current flowing during the application time of the reapplied direct current or direct-current voltage to revaluate the rotational direction and velocity of the alternating-current motor (2),
setting a frequency value corresponding to the revaluated rotational direction and velocity, and
restarting the alternating-current motor (2).

4. The sensorless vector control method according to claim 3, **characterized by**
determining the upper limit value for an estimated velocity value to be equal to or lower than the previous estimated velocity value.

5. The sensorless vector control method according to one of claims 1, 2 and 4, **characterized in that**
a time period for applying and respectively reapplying the direct current or the direct-current voltage to the alternating-current motor (2) is either obtained based on a predesignated lower limit velocity value, or is chosen equivalent to or proportional to a secondary circuit time constant.

6. The sensorless vector control method, according to one of claims 1, 2 and 4, **characterized by**
if the frequency of the secondary current could not been obtained during the application period of the direct current or the direct-current voltage:

determining that the alternating-current motor (2) is halted, and
transmitting a predesignated lowest frequency value or a zero frequency value to the frequency adjustment circuit.

7. The sensorless vector control method according to one of claims 1, 2 and 4, **characterized by**
performing a current compensation process for compensating a current flowing between the power converter (1) and the alternating-current motor (2) to zero in the free running state by applying a current instruction signal calculated using a current output by a current controller,
calculating an angular velocity, a level and a phase of a residual voltage in the alternating-current motor (2), based on an output voltage instruction signal obtained by employing a current output by a current controller,
estimating therewith a rotational direction and velocity of the alternating-current motor (2) in the free running state, and
determining a wait time until the current compensation process is started under consideration of a run-time frequency, i.e. the frequency of the power converter signals before the free running state has occurred, and a secondary circuit time constant of the alternating-current motor (2).

8. The sensorless vector control method according to claim 7, **characterized by**
if the run-time frequency of the power converter (1) is lower than an arbitrarily designated frequency before the free running state is entered, setting the wait time to zero until the current compensation process is started with the current instruction signal.

9. The sensorless vector control method according to claim 7 and 8, **characterized by**
if the current cannot be compensated to zero due to an high induction voltage of the alternating-current motor (2),

stopping the current compensation process,

short-circuiting the three input phases of the alternating-current motor (2),

exerting a damping force on the alternating-current motor (2),

decelerating the alternating-current motor (2),

compensating the current flowing between the power converter (1) and the alternating-current motor (2) to zero again, and

estimating the rotational direction and velocity of the alternating-current motor (2) in the free running state.

**10.** The sensorless vector control method according to claim 7, **characterized by**
increasing the sampling rate of the secondary current when performing the current compensation process.

**11.** The sensorless vector control method according to claim 10, **characterized by**
increasing a carrier frequency of the power converter (1) during the current compensation process.

**12.** The sensorless vector control method according to claim 1, **characterized by**
performing a current compensation process for compensating a current flowing between the power converter (1) and the alternating-current motor (2) to zero in the free running state by applying a current instruction signal calculated using a current output by a current controller,
if the current instruction signal is lower than a current according to an arbitrarily designated voltage level:

stopping the current compensation process,

transmitting a direct current instruction at an arbitrary level for a designated period of time,

thereafter transmitting a direct current instruction signal at an arbitrary level in a direction with a phase of 180 degrees different to the direction of the transmitted direct-current or direct-current voltage,

again performing the current compensation process for a certain period of time,

estimating the velocity of the alternating-current motor (2) using a frequency component of a current detection value,

further employing a phase relationship to estimate a rotational direction of the alternating-current motor (2), and

if the velocity and the rotational direction of the alternating-current motor (2) are estimated by providing a direct current instruction for the alternating-current motor (2), increasing the sampling rate of the secondary current during the current compensation process.

**13.** The sensorless vector control method according to claim 12, **characterized by**
increasing a carrier frequency of the power converter (1) during the current compensation process, if the velocity and the rotational direction of the alternating-current motor (2) are estimated by providing a direct current instruction for the alternating-current motor (2).

**14.** The sensorless vector control method according to claim 12, **characterized by**
employing a current detector (3) that is different from that used for a normal operation control process of the alternating-current motor (2) and that is sensitive enough to detect even a small current, if the velocity and the rotational direction of the alternating-current motor (2) is estimated by providing a direct current instruction for the alternating-current motor (2).

**15.** A sensorless vector control apparatus for an alternating-current motor (2) comprising:

a power converter (1) for applying a direct current or a direct-current voltage by a power converter to the alternating-current motor (2) in a free running state before the alternating-current motor (2) is restarted,
estimation means for estimating a rotational direction and a velocity for the alternating-current motor (2) based on a secondary current flowing between the power converter (1) and the alternating-current motor (2) during the application time of the direct current or the direct-current voltage, and
a frequency adjustment circuit (11) provided with an initial frequency that corresponds to the estimated rotational direction and velocity of the alternating-current motor (2),

wherein the frequency adjustment circuit (11) is adapted to match a frequency for controlling the alternating-current motor (2) with the velocity of the alternating-current motor (2),
**characterized by** further comprising
means for evaluating, if an estimated rotational direction or an estimated velocity deviates from an actual rotational direction or an actual velocity of the alternating-current motor (2) based on the level of a current flowing between the alternating-current motor (2) and the power converter (1) while the frequency adjustment circuit (11) adjusts the frequency.

16. The apparatus according to claim 15, further comprising means adapted to perform the steps of the method according to one of the claims 1 to 14.

**Patentansprüche**

1. Ein sensorloses Vektorsteuerungsverfahren für einen Wechselstrommotor, das folgende Schritte umfasst:

   Anlegen eines Gleichstroms oder einer Gleichspannung an den Wechselstrommotor (2) in einem freilaufenden Zustand durch einen Stromrichter, bevor der Wechselstrommotor (2) neu gestartet ist,
   Schätzen einer Drehrichtung und einer Geschwindigkeit für den Wechselstrommotor (2) basierend auf einem sekundären Strom, der zwischen dem Stromrichter (1) und dem Wechselstrommotor (2), während der Zeit des Anlegens des Gleichstroms oder der Gleichspannung fließt,
   Versorgen einer Frequenzabgleichsschaltung (11) mit einer Anfangsfrequenz, die der geschätzten Drehrichtung und Geschwindigkeit des Wechselstrommotors (2) entspricht, und
   Abgleichen einer Frequenz zum Steuern des Wechselstrommotors (2) mit der Geschwindigkeit des Wechselstrommotors (2) durch die Frequenzabgleichsschaltung,

   **gekennzeichnet durch**
   Beurteilen, ob eine geschätzte Drehrichtung oder eine geschätzte Geschwindigkeit von einer tatsächlichen Drehrichtung oder einer tatsächlichen Geschwindigkeit des Wechselstrommotors (2) abweicht, basierend auf dem Strompegel, der zwischen dem Wechselstrommotor (2) und dem Stromrichter (1) fließt, während die Frequenzabgleichsschaltung (11) die Frequenz anpasst.

2. Das sensorlose Vektorsteuerungsverfahren nach Anspruch 1, **gekennzeichnet dadurch, dass** der Strompegel, der zwischen dem Wechselstrommotor (2) und dem Stromrichter (1) fließt verwendet wird, um zu bestimmen, ob die geschätzte Drehrichtung und Geschwindigkeit beziehungsweise Frequenz von der tatsächlichen Drehrichtung und Geschwindigkeit des Wechselstrommotors (2) abweicht, wenn er während einer vorgegebenen Zeitdauer gleich oder höher als ein bestimmter Strompegel ist.

3. Das sensorlose Vektorsteuerungsverfahren nach Anspruch 1 oder 2, **gekennzeichnet durch**
   wenn die geschätzte Drehrichtung und Frequenz beziehungsweise Geschwindigkeit von der tatsächlichen Drehrichtung und Geschwindigkeit des Wechselstrommotors (2) abweicht:

   Wiederanlegen eines Gleichstroms oder eine Gleichspannung an den Wechselstrommotor (2)
   Verwenden eines sekundären Stroms, der während der Zeit des Anlegens des wiederangelegten Gleichstroms oder Gleichspannung fließt, um die Drehrichtung und Geschwindigkeit des Wechselstrommotors (2) neu zu beurteilen,
   Setzen eines Frequenzwertes entsprechend der neu beurteilten Drehrichtung und Geschwindigkeit, und
   Neustarten des Wechselstrommotors (2).

4. Das sensorlose Vektorsteuerungsverfahren nach Anspruch 3, **gekennzeichnet durch** Bestimmen des oberen Grenzwertes für einen geschätzten Geschwindigkeitswert, der gleich oder niedriger als der vorherige geschätzte Geschwindigkeitswert ist.

5. Das sensorlose Vektorsteuerungsverfahren nach einem der Ansprüche 1, 2 und 4, **gekennzeichnet dadurch, dass** ein Zeitraum für das Anlegen und entsprechend das Wiederanlegen des Gleichstroms oder der Gleichspannung an den Wechselstrommotors (2) entweder basierend auf einem vorbestimmten unteren Geschwindigkeitsgrenzwert erlangt wird, oder äquivalent zu oder proportional zu einer sekundären Schaltzeitkonstante gewählt wird.

6. Das sensorlose Vektorsteuerungsverfahren nach einem der Ansprüche 1, 2 und 4, **gekennzeichnet durch**
   wenn die Frequenz des sekundären Stroms während des Zeitraums des Anlegens des Gleichstroms oder der Gleichspannung nicht erhalten wurde:

   Bestimmen, dass der Wechselstrommotor (2) angehalten ist, und
   Senden eines vorgegebenen niedrigsten Frequenzwertes oder eines Nullfrequenzwertes an die Frequenzabgleichsschaltung.

**7.** Das sensorlose Vektorsteuerungsverfahren nach einem der Ansprüche 1, 2 und 4, **gekennzeichnet durch** Durchführen eines Stromkompensationsprozesses, um einen Strom, der zwischen dem Stromrichter (1) und dem Wechselstrommotor (2) fließt, im freilaufenden Zustand auf Null zu kompensieren **durch** Anlegen eines Stromanweisungssignals, das unter Verwendung eines **durch** einen Stromregler ausgegebenen Stroms berechnet wird, Berechnen einer Winkelgeschwindigkeit, eines Pegels und einer Phase einer Restspannung im Wechselstrommotor (2), basierend auf einem ausgegebenen Spannungsanweisungssignal, das unter Verwendung eines von einem Stromregler ausgegeben Stromes erhalten wird,
Schätzen einer Drehrichtung und Geschwindigkeit des Wechselstrommotors (2) im freilaufenden Zustand, und Bestimmen einer Wartezeit, bis der Stromkompensationsprozess gestartet wird unter Berücksichtigung einer Betriebszeitfrequenz, beziehungsweise der Frequenz des Stromrichtersignals bevor der freilaufende Zustand eingetreten ist, und einer sekundären Schaltzeitkonstante des Wechselstrommotors (2).

**8.** Das sensorlose Vektorsteuerungsverfahren nach Anspruch 7, **gekennzeichnet durch** Setzen der Wartezeit, bis der Stromkompensationsprozess mit dem Stromanweisungssignal gestartet wird, auf Null, wenn die Betriebszeitfrequenz des Stromrichters (1) niedriger als eine beliebig festgelegte Frequenz ist, bevor der freilaufende Zustand eingetreten ist,

**9.** Das sensorlose Vektorsteuerungsverfahren nach Anspruch 7 und 8, **gekennzeichnet durch**
wenn der Strom nicht auf Null kompensiert werden kann aufgrund einer hohen Induktionsspannung des Wechselstrommotors (2),

Stoppen des Stromkompensationsprozesses,
Kurzschließen der drei Eingangsphasen des Wechselstrommotors (2),
Anwenden einer Dämpfungskraft auf den Wechselstrommotor (2),
Verlangsamen des Wechselstrommotors (2),
Kompensieren des Stromes, der zwischen dem Stromrichter (1) und dem Wechselstrommotor (2) fließt, wieder auf Null, und
Schätzen der Drehrichtung und Geschwindigkeit des Wechselstrommotors (2) im freilaufenden Zustand.

**10.** Das sensorlose Vektorsteuerungsverfahren nach Anspruch 7, **gekennzeichnet durch** Erhöhen der Abtastrate des sekundären Stromes, wenn der Stromkompensationsprozess durchgeführt wird.

**11.** Das sensorlose Vektorsteuerungsverfahren nach Anspruch 10, **gekennzeichnet durch** Erhöhung einer Trägerfrequenz des Stromrichters (1) während des Stromkompensationsprozesses.

**12.** Das sensorlose Vektorsteuerungsverfahren nach Anspruch 1, **gekennzeichnet durch**
Durchführen eines Stromkompensationsprozesses, um einen Strom, der zwischen dem Stromrichter (1) und dem Wechselstrommotor (2) fließt, im freilaufenden Zustand auf Null zu kompensieren **durch** Anlegen eines Stromanweisungssignals, das unter Verwendung eines **durch** einen Stromregler ausgegebenen Stromes berechnet wird, wenn das Stromanweisungssignal niedriger als ein Strom entsprechend eines beliebig festgelegten Spannungspegels ist:

Stoppen des Stromkompensationsprozesses,
Senden einer Gleichstromanweisung beliebigen Pegels für eine festgelegte Zeitdauer,
anschließend Senden eines Gleichstromanweisungssignals beliebigem Pegels in eine Richtung mit einer Phase, die um 180° verschieden zu der Richtung des gesendeten Gleichstroms oder Gleichspannung ist,
erneutes Durchführen des Stromkompensationsprozesses für eine bestimmte Zeitdauer,
Schätzen der Geschwindigkeit des Wechselstrommotors (2) unter Verwendung einer Frequenzkomponente eines Stromdetektionswertes,
Verwenden einer Phasenlage, um eine Drehrichtung des Wechselstrommotors (2) zu schätzen, und
Erhöhen der Abtastrate des sekundären Stromes während des Stromkompensationsprozesses, wenn die Geschwindigkeit und die Drehrichtung des Wechselstrommotors (2) **durch** das Bereitstellen einer Gleichstromanweisung für den Wechselstrommotor (2) geschätzt wurde,

**13.** Das sensorlose Vektorsteuerungsverfahren nach Anspruch 12, **gekennzeichnet durch** Erhöhen einer Trägerfrequenz des Stromrichters (1) während des Stromkompensationsprozesses, wenn die Geschwindigkeit und die Drehrichtung des Wechselstrommotors (2) **durch** Bereitstellen einer Gleichstromanweisung für den Wechselstrommotor (2) geschätzt wurden.

14. Das sensorlose Vektorsteuerungsverfahren nach Anspruch 12, **gekennzeichnet durch** Verwenden eines Stromdetektors (3), der verschieden ist zu dem, der für einen normalen Betriebssteuerprozess des Wechselstrommotors (2) verwendet wird, und der empfindlich genug ist, um auch einen schwachen Strom zu detektieren, wenn die Geschwindigkeit und die Drehrichtung des Wechselstrommotors (2) **durch** Bereitstellen einer Gleichstromanweisung für den Wechselstrommotor (2) geschätzt wird.

15. Eine sensorlose Vektorsteuerungsvorrichtung für einen Wechselstrommotor (2), umfassend:

einen Stromrichter (1), um in einem freilaufenden Zustand durch einen Stromrichter einen Gleichstrom oder eine Gleichspannung an den Wechselstrommotor (2) anzulegen, bevor der Wechselstrommotor (2) neu gestartet ist,
Schätzmittel, um eine Drehrichtung und eine Geschwindigkeit für den Wechselstrommotor (2) zu schätzen, basierend auf einem sekundären Strom, der zwischen dem Stromrichter (1) und dem Wechselstrommotor (2) während der Zeit des Anlegens des Gleichstroms oder der Gleichspannung fließt, und
eine Frequenzabgleichsschaltung (11), die mit einer Anfangsfrequenz versorgt wird, die der geschätzten Drehrichtung und Geschwindigkeit des Wechselstrommotors (2) entspricht,

wobei die Frequenzabgleichsschaltung (11) angepasst ist, um eine Frequenz für das Steuern des Wechselstrommotors (2) mit der Geschwindigkeit des Wechselstrommotors (2) abzugleichen,
**gekennzeichnet durch** weiter umfassend
Mittel zur Beurteilung, ob eine geschätzte Drehrichtung oder eine geschätzte Geschwindigkeit von einer tatsächlichen Drehrichtung oder einer tatsächlichen Geschwindigkeit des Wechselstrommotors (2) abweicht, basierend auf dem Pegel eines Stroms, der zwischen dem Wechselstrommotor (2) und dem Stromrichter (1) fließt, während die Frequenzabgleichsschaltung (11) die Frequenz anpasst.

16. Die Vorrichtung nach Anspruch 15, weiter Mittel umfassend, die angepasst sind, um die Verfahrensschritte nach einem der Ansprüche 1 bis 14 durchzuführen.

## Revendications

1. Procédé de commande vectorielle sans détecteur pour un moteur à courant alternatif, comprenant les étapes consistant à:

appliquer un courant continu ou une tension continue par un convertisseur de puissance au moteur à courant alternatif (2) en régime libre avant que le moteur à courant alternatif (2) ne soit redémarré,
estimer un sens de rotation et une vitesse pour le moteur à courant alternatif (2) sur la base d'un courant secondaire circulant entre le convertisseur de puissance (1) et le moteur à courant alternatif (2) pendant le temps d'application du courant continu ou de la tension continue,
fournir à un circuit d'ajustement de fréquence (11) une fréquence initiale qui correspond au sens de rotation et à la vitesse estimés du moteur à courant alternatif (2), et
adapter une fréquence pour contrôler le moteur à courant alternatif (2) à la vitesse du moteur à courant alternatif (2) par le biais du circuit d'ajustement de fréquence,

**caractérisé par**
l'évaluation, si un sens de rotation estimé ou une vitesse estimée dévient par rapport à un sens de rotation réel ou une vitesse réelle du moteur à courant alternatif (2) sur la base du niveau d'un courant circulant entre le moteur à courant alternatif (2) et le convertisseur de puissance (1) tandis que le circuit d'ajustement de fréquence (11) ajuste la fréquence.

2. Procédé de commande vectorielle sans détecteur selon la revendication 1, **caractérisé en ce que**
le niveau du courant circulant entre le moteur à courant alternatif (2) et le convertisseur de puissance (1), quand il est égal ou supérieur à un certain niveau de courant pendant une période de temps prédéterminée, est utilisé pour déterminer si le sens de rotation et la vitesse ou bien la fréquence estimés dévient du sens de rotation et de la vitesse réels du moteur à courant alternatif (2).

**3.** Procédé de commande vectorielle sans détecteur selon la revendication 1 ou 2, **caractérisé par**
si le sens de rotation et la fréquence ou bien la vitesse estimés dévient du sens de rotation et de la vitesse réels du moteur à courant alternatif (2):

la ré-application d'un courant continu ou d'une tension continue au moteur à courant alternatif (2),
l'emploi d'un courant secondaire circulant pendant le temps d'application du courant continu ou la tension continue ré-appliqués pour réévaluer le sens de rotation et la vitesse du moteur à courant alternatif (2),
la définition d'une valeur de fréquence correspondant au sens de rotation et à la vitesse réévalués, et
le redémarrage du moteur à courant alternatif (2).

**4.** Procédé de commande vectorielle sans détecteur selon la revendication 3, **caractérisé par** la détermination de la valeur limite supérieure pour qu'une valeur de vitesse estimée soit égale ou inférieure à la valeur de vitesse estimée précédente.

**5.** Procédé de commande vectorielle sans détecteur selon l'une quelconque des revendications 1, 2 et 4, **caractérisé en ce que**
une période pour l'application ou bien la ré-application du courant continu ou de la tension continue au moteur à courant alternatif (2) est soit obtenue sur la base d'une valeur de vitesse limite inférieure prédésignée, soit choisie équivalente ou proportionnelle à une constante de temps de circuit secondaire.

**6.** Procédé de commande vectorielle sans détecteur, selon l'une quelconque des revendications 1, 2 et 4, **caractérisé par**
si la fréquence du courant secondaire n'a pas pu être obtenue pendant la période d'application du courant continu ou de la tension continue :

la détermination que le moteur à courant alternatif (2) est arrêté, et
la transmission d'une valeur de fréquence la plus basse prédésignée ou d'une valeur de fréquence zéro au circuit d'ajustement de fréquence.

**7.** Procédé de commande vectorielle sans détecteur selon l'une quelconque des revendications 1, 2 et 4, **caractérisé par**
l'exécution d'un processus de compensation du courant pour compenser un courant circulant entre le convertisseur de puissance (1) et le moteur à courant alternatif (2) à zéro en régime libre en appliquant un signal d'instruction de courant calculé en utilisant un courant envoyé en sortie par un contrôleur de courant,
le calcul d'une vitesse angulaire, d'un niveau et d'une phase d'une tension résiduelle dans le moteur à courant alternatif (2), sur la base d'un signal d'instruction de tension de sortie obtenu en employant un courant envoyé en sortie par un contrôleur de courant,
l'estimation avec cela d'un sens de rotation et d'une vitesse du moteur à courant alternatif (2) en régime libre, et
la détermination d'un temps d'attente jusqu'à ce que le processus de compensation du courant soit démarré en considération d'une fréquence lors du temps de marche, c'est-à-dire la fréquence des signaux du convertisseur de puissance avant que le régime libre ne soit atteint, et une constante de temps de circuit secondaire du moteur à courant alternatif (2).

**8.** Procédé de commande vectorielle sans détecteur selon la revendication 7, **caractérisé par**
si la fréquence de durée d'exploitation du convertisseur de puissance (1) est inférieure à une fréquence désignée de manière arbitraire avant l'entrée en régime libre, la définition du temps d'attente à zéro jusqu'à ce que le processus de compensation du courant soit démarré par le signal d'instruction de courant.

**9.** Procédé de commande vectorielle sans détecteur selon les revendications 7 et 8, **caractérisé par**
si le courant ne peut pas être compensé à zéro en raison d'une tension d'induction élevée du moteur à courant alternatif (2),

l'arrêt du processus de compensation du courant,
la mise en court-circuit des trois phases d'entrée du moteur à courant alternatif (2),
l'application d'une force d'amortissement sur le moteur à courant alternatif (2),
la décélération du moteur à courant alternatif (2),
la compensation du courant circulant entre le convertisseur de puissance (1) et le moteur à courant alternatif (2) à zéro de nouveau, et

**EP 1 536 552 B1**

l'estimation du sens de rotation et de la vitesse du moteur à courant alternatif (2) en régime libre.

**10.** Procédé de commande vectorielle sans détecteur selon la revendication 7, **caractérisé par** l'augmentation de la fréquence d'échantillonnage du courant secondaire pendant l'exécution du processus de compensation du courant.

**11.** Procédé de commande vectorielle sans détecteur selon la revendication 10, **caractérisé par** l'augmentation d'une fréquence porteuse du convertisseur de puissance (1) pendant le processus de compensation du courant.

**12.** Procédé de commande vectorielle sans détecteur selon la revendication 1, **caractérisé par**
l'exécution d'un processus de compensation du courant pour compenser un courant circulant entre le convertisseur de puissance (1) et le moteur à courant alternatif (2) à zéro en régime libre en appliquant un signal d'instruction de courant calculé en utilisant un courant envoyé en sortie par un contrôleur de courant,
si le signal d'instruction de courant est inférieur à un courant selon un niveau de tension désigné de manière arbitraire :

l'arrêt du processus de compensation du courant,
la transmission d'une instruction de courant continu à un niveau arbitraire pendant une période de temps désignée,
puis la transmission d'un signal d'instruction de courant continu à un niveau arbitraire dans une direction avec une phase de 180 degrés différente de la direction du courant continu ou de la tension continue transmis,
l'exécution de nouveau du processus de compensation du courant pendant une certaine période de temps,
l'estimation de la vitesse du moteur à courant alternatif (2) en utilisant une composante de fréquence d'une valeur de détection de courant,
l'emploi en outre d'une relation de phase pour estimer un sens de rotation du moteur à courant alternatif (2), et si la vitesse et le sens de rotation du moteur à courant alternatif (2) sont estimés en fournissant une instruction de courant continu pour le moteur à courant alternatif (2), l'augmentation de la fréquence d'échantillonnage du courant secondaire pendant le processus de compensation du courant.

**13.** Procédé de commande vectorielle sans détecteur selon la revendication 12, **caractérisé par** l'augmentation d'une fréquence porteuse du convertisseur de puissance (1) pendant le processus de compensation du courant, si la vitesse et le sens de rotation du moteur à courant alternatif (2) sont estimés en fournissant une instruction de courant continu pour le moteur à courant alternatif (2).

**14.** Procédé de commande vectorielle sans détecteur selon la revendication 12, **caractérisé par** l'emploi d'un détecteur de courant (3) qui est différent de celui utilisé pour un processus de contrôle de fonctionnement normal du moteur à courant alternatif (2) et qui est suffisamment sensible pour détecter même un courant faible, si la vitesse et le sens de rotation du moteur à courant alternatif (2) sont estimés en fournissant une instruction de courant continu pour le moteur à courant alternatif (2).

**15.** Dispositif de commande vectorielle sans détecteur pour un moteur à courant alternatif (2), comprenant :

un convertisseur de puissance (1) pour appliquer un courant continu ou une tension continue par un convertisseur de puissance au moteur à courant alternatif (2) en régime libre avant que le moteur à courant alternatif (2) ne soit redémarré,
un moyen d'estimation pour estimer un sens de rotation et une vitesse pour le moteur à courant alternatif (2) sur la base d'un courant secondaire circulant entre le convertisseur de puissance (1) et le moteur à courant alternatif (2) pendant le temps d'application du courant continu ou de la tension continue, et
un circuit d'ajustement de fréquence (11) doté d'une fréquence initiale qui correspond au sens de rotation et à la vitesse estimés du moteur à courant alternatif (2),

dans lequel le circuit d'ajustement de fréquence (11) est adapté pour faire correspondre une fréquence pour contrôler le moteur à courant alternatif (2) à la vitesse du moteur à courant alternatif (2),
**caractérisé en ce qu'**il comprend en outre
un moyen pour évaluer, si un sens de rotation estimé ou une vitesse estimée dévient d'un sens de rotation réel ou d'une vitesse réelle du moteur à courant alternatif (2) sur la base du niveau d'un courant circulant entre le moteur à courant alternatif (2) et le convertisseur de puissance (1) tandis que le circuit d'ajustement de fréquence (11) ajuste la fréquence.

**16.** Dispositif selon la revendication 15, comprenant en outre moyens adapté pour exécuter les étapes du procédé selon l'une quelconque des revendications 1 à 14.

FIG. 1

FIG. 2(a)

FIG. 2(b)

EP 1 536 552 B1

FIG. 3(a)

FIG. 3(b)

FIG. 4(a)

FIG. 4(b)

EP 1 536 552 B1

FIG. 5(a)

FIG. 5(b)

# FIG. 6

A1

RESTART ALTERNATING-CURRENT
MOTOR IN FREE RUNNING STATE

S1

SUPPLY PREDETERMINED DIRECT CURRENT TO ALTERNATING-
CURRENT MOTOR FOR PREDETERMINED TIME PERIOD

S2

DETERMINE FREQUENCY AND ROTATIONAL DIRECTION BASED ON
DETECTED VALUE OF TORQUE CURRENT FLOWING IN ALTERNATING-
CURRENT MOTOR

S3

DESIGNATE ABOVE DESCRIBED FREQUENCY AND ROTATIONAL
DIRECTION TO OUTPUT FREQUENCY ADJUSTMENT CIRCUIT

S4

CURRENT CONTINUOUSLY
FLOWING IN ALTERNATING-
CURRENT MOTOR AT
DESIGNATED LEVEL OR HIGHER
FOR PREDETERMINED TIME
PERIOD?

YES                                  NO

S5

DETERMINE TO BE
ABNORMAL STATE

S7

DETERMINE TO BE NORMAL
START

S6

HALT POWER CONVERTER

S8

SWITCH SWITCHES S1 TO
S3 TO SIDE A

# FIG. 7

EP 1 536 552 B1

# FIG. 8

FIG. 9

FIG. 10

EP 1 536 552 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001161094 A

- JP 2002080891 A